# EUROPEAN PATENT APPLICATION

(11) **EP 4 422 301 A1**
(43) Date of publication of application: **28.08.2024**
(21) Application number: 21960883.3
(22) Date of filing: 19.10.2021
(51) Int. Cl.: H04W 68/00, H04W 68/02, H04W 76/28

(54) **PAGING PARAMETER DETERMINATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2021/124784
(87) International publication number: WO 2023/065124

(57) **Abstract**

Embodiments of the present disclosure relate to a paging parameter determination method and apparatus, a communication device, and a storage medium. The method comprises: a user equipment (UE) ignores an access network (RAN) paging period when a non-active extended discontinuous reception (eDRX) period is within a first value range.

## Description

### TECHNICAL FIELD

The present disclosure relates to, but is not limited to, the field of wireless communication technologies, in particular to a method and an apparatus for determining a paging parameter, a communication device and a storage medium.

### BACKGROUND

The 5th generation (5G) cellular mobile communication network further reduces energy consumption of a terminal by using an extended discontinuous reception (eDRX) mechanism. In each eDRX cycle, the terminal may receive downlink data only within a set paging time window (PTW), and the terminal is in a dormant state and does not receive downlink data in remaining time. The eDRX mechanism may obtain a trade-off between downlink service delay and power consumption. For example, the eDRX mechanism may be used for remote gas switch control and the like.

### SUMMARY

Accordingly, the present disclosure provides a method and an apparatus for determining a paging parameter, a communication device and a storage medium.

According to a first aspect of embodiments of the present disclosure, a method for determining a paging parameter is provided, which is performed by a user equipment (UE). The method includes:
in response to an inactive state extended discontinuous reception (eDRX) cycle being within a first value range, ignoring a radio access network (RAN) paging cycle.

In an embodiment, the method further includes:
in response to ignoring the RAN paging cycle, determining, based on the inactive state eDRX cycle, a cycle for the UE to monitor a paging message.

In an embodiment, determining, based on the inactive state eDRX cycle, the cycle for the UE to monitor the paging message includes at least one of:
in response to a core network (CN) paging time window (PTW) being set for the UE, determining, based on the inactive state eDRX cycle, a CN paging cycle, and a default paging cycle, within the CN PTW, a cycle for monitoring a RAN paging message and a CN paging message; or
in response to a CN PTW being set for the UE, determining the inactive state eDRX cycle as a cycle for monitoring a RAN paging message outside the CN PTW.

In an embodiment, determining, based on the inactive state eDRX cycle, the CN paging cycle, and the default paging cycle, within the CN PTW, the cycle for monitoring the RAN paging message and the CN paging message includes:
determining, within the CN PTW, the shortest one of the inactive state eDRX cycle, the CN paging cycle, and the default paging cycle as the cycle for monitoring the RAN paging message and the CN paging message.

In an embodiment, determining, based on the inactive state eDRX cycle, the cycle for the UE to monitor the paging message includes:
in response to no CN PTW being set for the UE, determining the shorter one of the inactive state eDRX cycle and a CN paging cycle as the cycle for monitoring a RAN paging message and a CN paging message.

In an embodiment, the method further includes:
in response to the inactive state eDRX cycle being within a second value range, determining, based on the inactive state eDRX cycle, a RAN PTW for monitoring a paging message within the inactive state eDRX cycle, wherein the first value range is different from the second value range.

In an embodiment, the method further includes:
in response to the inactive state eDRX cycle being within a second value range, determining, at least based on the RAN paging cycle, a cycle for the UE to monitor a paging message, wherein the first value range is different from the second value range.

In an embodiment, in response to the inactive state eDRX cycle being within the second value range, determining, at least based on the RAN paging cycle, the cycle for the UE to monitor the paging message includes at least one of:
in response to a CN PTW being set for the UE, determining, based on the RAN paging cycle, a CN paging cycle, and a default paging cycle, within the CN PTW which overlaps with a RAN PTW, a cycle for monitoring a RAN paging message and a CN paging message ; or
in response to a CN PTW being set for the UE, determining, within a RAN PTW which does not overlap with the CN PTW, the RAN paging cycle as a cycle for monitoring a RAN paging message.

In an embodiment, determining, based on the RAN paging cycle, the CN paging cycle, and the default paging cycle, within the CN PTW which overlaps with the RAN PTW, the cycle for monitoring the RAN paging message and the CN paging message includes:
determining, within the CN PTW which overlaps with the RAN PTW, the shortest one of the RAN paging cycle, the CN paging cycle, and the default paging cycle as the cycle for monitoring the RAN paging message and the CN paging message within the CN PTW.

According to a second aspect of the embodiments of the present disclosure, a method for transmitting information is provided, which is performed by a first base station, and includes:
transmitting inactive state extended discontinuous reception (eDRX) information, in which the inactive state eDRX information is at least configured to indicate an inactive state eDRX cycle.

In an embodiment, transmitting the inactive state eDRX information includes:
transmitting a radio access network (RAN) paging message carrying the transmission inactive state eDRX information to a user equipment (UE);
performing transmission of a context request message carrying the transmission inactive state eDRX information with a second base station; and
performing transmission of a context response message carrying the transmission inactive state eDRX information with the second base station.

In an embodiment, in response to the inactive state eDRX cycle being within a first value range, the inactive state eDRX information is at least configured to indicate the inactive state eDRX cycle; and

in response to the inactive state eDRX cycle being within a second value range, the inactive state eDRX information is at least configured to indicate the inactive state eDRX cycle and a RAN paging cycle, wherein the first value range is different from the second value range.

In an embodiment, the inactive state eDRX information is at least configured to indicate a transmission inactive state eDRX cycle and a RAN paging cycle.

In an embodiment, the method further includes:
in response to the first base station being a non-anchor base station, and the inactive state eDRX cycle being within a first value range, decoding the transmission inactive state eDRX cycle indicated by the inactive state eDRX information, wherein the first value range is different from a second value range; and
in response to the first base station being a non-anchor base station, and the inactive state eDRX cycle being within the second value range, decoding the transmission inactive state eDRX cycle and the RAN paging cycle indicated by the inactive state eDRX information.

According to a third aspect of the embodiments of the present disclosure, an apparatus for determining a paging parameter is provided. The apparatus includes:
a first determining module, configured to ignore a radio access network (RAN) paging cycle, in response to an inactive state extended discontinuous reception (eDRX) cycle being within a first value range.

In an embodiment, the apparatus further includes:
a second determining module, configured to determine, based on the inactive state eDRX cycle, a cycle for the UE to monitor a paging message in response to the RAN paging cycle being ignored.

In an embodiment, the second determining module is configured to perform at least one of:
in response to a core network (CN) paging time window (PTW) being set for the UE, determining, based on the inactive state eDRX cycle, a CN paging cycle, and a default paging cycle, within the CN PTW, a cycle for monitoring a RAN paging message and a CN paging message; or
in response to a CN PTW being set for the UE, determining the inactive state eDRX cycle as a cycle for monitoring a RAN paging message outside the CN PTW.

In an embodiment, the second determining module is configured to:
determine, within the CN PTW, the shortest one of the inactive state eDRX cycle, the CN paging cycle, and the default paging cycle as the cycle for monitoring the RAN paging message and the CN paging message.

In an embodiment, the second determining module is configured to:
in response to no CN PTW being set for the UE, determine the shorter one of the inactive state eDRX cycle and a CN paging cycle as the cycle for monitoring a RAN paging message and a CN paging message.

In an embodiment, the apparatus further includes:
a third determining module, configured to determine, based on the inactive state eDRX cycle, a RAN PTW for monitoring a paging message within the inactive state eDRX cycle, in response to the inactive state eDRX cycle being within a second value range, wherein the first value range is different from the second value range.

In an embodiment, the apparatus further includes:
a fourth determining module, configured to determine, at least based on the RAN paging cycle, a cycle for the UE to monitor a paging message, in response to the inactive state eDRX cycle being within a second value range, wherein the first value range is different from the second value range.

In an embodiment, the fourth determining module is configured to perform at least one of:
in response to a CN PTW being set for the UE, determining, based on the RAN paging cycle, a CN paging cycle, and a default paging cycle, within the CN PTW which overlaps with a RAN PTW, a cycle for monitoring a RAN paging message and a CN paging message ; or
in response to a CN PTW being set for the UE, determining, within a RAN PTW which does not overlap with the CN PTW, the RAN paging cycle as a cycle for monitoring a RAN paging message.

In an embodiment, the fourth determining module is configured to:
determine, within the CN PTW which overlaps with the RAN PTW, the shortest one of the RAN paging cycle, the CN paging cycle, and the default paging cycle as the cycle for monitoring the RAN paging message and the CN paging message within the CN PTW.

According to the fourth aspect of embodiments of the present disclosure, an apparatus for transmitting information is provided, the apparatus is located in a first base station, and includes:
a transmitting module, configured to transmit inactive state extended discontinuous reception (eDRX) information, in which the inactive state eDRX information is at least configured to indicate an inactive state eDRX cycle.

In an embodiment, the transmitting module is configured to:
transmit a radio access network (RAN) paging message carrying the transmission inactive state eDRX information to a user equipment (UE);
perform transmission of a context request message carrying the transmission inactive state eDRX information with a second base station; and
perform transmission of a context response message carrying the transmission inactive state eDRX information with the second base station.

In an embodiment, in response to the inactive state eDRX cycle being within a first value range, the inactive state eDRX information is at least configured to indicate the inactive state eDRX cycle; and
in response to the inactive state eDRX cycle being within a second value range, the inactive state eDRX information is at least configured to indicate the inactive state eDRX cycle and a RAN paging cycle, wherein the first value range is different from the second value range.

In an embodiment, the inactive state eDRX information is at least configured to indicate a transmission inactive state eDRX cycle and a RAN paging cycle.

In an embodiment, the apparatus further includes:
a first decoding module, configured to decode the transmission inactive state eDRX cycle indicated by the inactive state eDRX information, in response to the first base station being a non-anchor base station, and the inactive state eDRX cycle being within a first value range, wherein the first value range is different from a second value range; and
a second decoding module, configured to decode the transmission inactive state eDRX cycle and the RAN paging cycle indicated by the inactive state eDRX information, in response to the first base station being a non-anchor base station, and the inactive state eDRX cycle being within the second value range.

According to a fifth aspect of the present disclosure, a communication device is provided, including a processor, a memory and an executable program which is stored in the memory and executable by the processor, in which the executable program, when executed by the processor, implements steps of the method for determining a paging parameter according to the first aspect or steps of the method for transmitting information according to the second aspect.

According to a sixth aspect of the present disclosure, a storage medium having an executable program stored thereon is provided, in which the executable program, when executed by the processor, implements steps of the method for determining a paging parameter according to the first aspect or steps of the method for transmitting information according to the second aspect.

According to the method and apparatus for determining a paging parameter, the communication device, and the storage medium provided in the embodiments of the present disclosure, when an inactive state eDRX cycle is within a first value range, the UE ignores a RAN paging cycle. In this way, the UE may determine, based on the inactive state eDRX cycle, that the UE ignores the RAN paging cycle, which can reduce complexity caused by considering the RAN paging cycle when determining a cycle for monitoring the paging message, and improve an efficiency of determining the cycle for monitoring the paging message.

It should be understood that the above general descriptions and following detailed descriptions are exemplary and explanatory only, and are not intended to limit the present disclosure.

### BRIEF DESCRIPTION OF THE DRAWINGS

The drawings herein are incorporated into the specification and constitute a part of the specification, show embodiments in conformity with embodiments of the present disclosure, and explain the principle in embodiments of the present disclosure together with the specification.
FIG. 1 is a schematic diagram of a wireless communication system according to an embodiment.
FIG. 2 is a schematic diagram of an eDRX cycle according to an embodiment.
FIG. 3 is a schematic diagram of an interaction of configuring an eDRX cycle according to an embodiment.
FIG. 4 is a flowchart of a method for determining a paging parameter according to an embodiment.
FIG. 5 is a flowchart of a method for determining a paging parameter according to another embodiment.
FIG. 6 is a flowchart of a method for transmitting information according to an embodiment.
FIG. 7 is a block diagram of an apparatus for determining a paging parameter according to an embodiment.
FIG. 8 is a block diagram of an apparatus for transmitting information according to an embodiment.
FIG. 9 is a block diagram of an apparatus for determining a paging parameter or transmitting information according to an embodiment.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all the implementations consistent with the present invention. Rather, they are merely examples of the apparatus and method consistent with some aspects of the present invention as detailed in the appended claims.

The terms described in the present disclosure are only for the purpose of describing specific embodiments and are not intended to limit the embodiments of the present disclosure. The singular forms "a", "the" and "said" used in the embodiments of the present disclosure and the attached claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in the embodiments of the present disclosure to describe various information, such information shall not be limited to these terms. These terms are only used to distinguish the same type of information. For example, subject to the scope of this present disclosure, first information may also be referred to as second information, and similarly, and second information may also be referred to as first information. It depends on the context. For example, the word "if' as used herein may be interpreted as "in a case that" or "when" or "in response to determination".

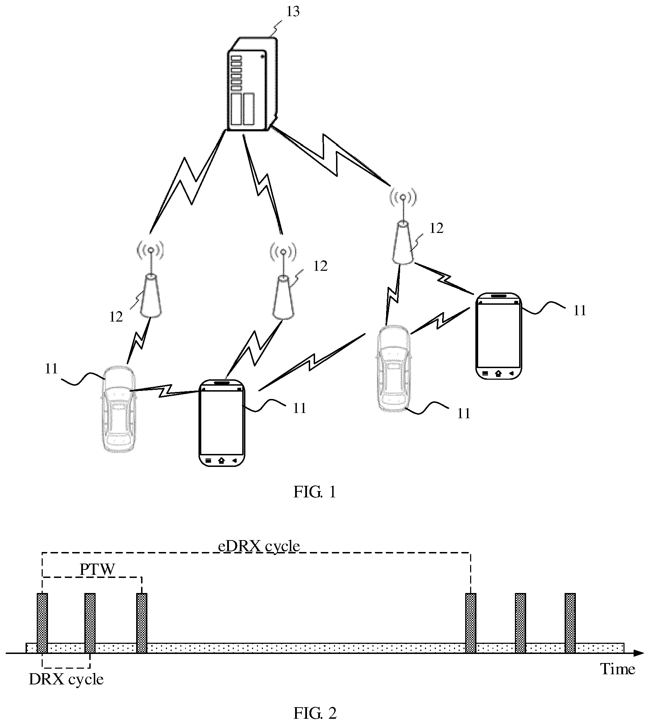

With reference to FIG. 1, FIG. 1 is a schematic diagram illustrating a wireless communication system provided in an embodiment of the present disclosure. As illustrated in FIG. 1, the wireless communication system is a communication system based on a cellular mobile communication technology. The wireless communication system may include several terminals 11 and several base stations 12.

The terminal 11 may refer to a device that provides voice and/or data connectivity for the user. The terminal 11 may communicate with one or more core networks through a radio access network (RAN). The terminal 11 may be an internet of things terminal, for example, a sensor device, a mobile phone (or referred to as a cellular phone) and a computer having an internet of things terminal, for example, may be a fixed, portable, compact, handheld, computer built-in or vehicle-mounted apparatus, for example, a station (STA), a subscriber unit, a subscriber station, a mobile station, a mobile, a remote station, an access point, a remote terminal, an access terminal, a user terminal, a user agent, a user device or a user equipment (UE). Or, the terminal 11 may be a device of an unmanned vehicle. Or, the terminal 11 may be a vehicle-mounted device, for example, may be a driving computer with a wireless communication function, or a wireless communication device externally connected to a driving computer. Or, the terminal 11 may be a roadside device, for example, may be a street lamp with the wireless communication function, a signal light or other roadside devices, etc.

A base station 12 may be a network side device in the wireless communication system. The wireless communication system may be a 4th generation mobile communication (4G) system, also referred to as a long term evolution (LTE) system; or the wireless communication system may be a 5G system, also referred to as a new radio (NR) system or a 5G NR system. Or, the wireless communication system may be a next generation system of the 5G system. An access network in a 5G system may be referred to as a new generation-radio access network (NG-RAN). Or, the wireless communication system may be a machine type communication (MTC) system.

The base station 12 may be an eNB adopted in 4G system. Or, the base station 12 may be a base station (gNB) with a centralized distributed architecture in the 5G system. When the base station 12 adopts the centralized distributed architecture, the base station 120 generally includes a central unit (CU) and at least two distributed units (DU). A protocol stack of a packet data convergence protocol (PDCP) layer, a radio link control (RLC) layer and a media access control (MAC) layer is configured in the CU; a physical (PHY) layer protocol stack is configured in the DU. The specific implementation of the base station 12 is not limited in the embodiments of the disclosure.

The base station 12 may establish a wireless connection with the terminal 11 through a wireless air interface. In different implementations, the wireless radio interface is a wireless radio interface based on a 4G standard; or, the wireless radio interface is a wireless radio interface based on a 5G standard. For example, the wireless radio interface is a new radio interface; or, the wireless radio interface may be a wireless radio interface based on a next generation mobile communication network technology standard of the 5G.

In some embodiments, an E2E (end to end) connection can also be established between the terminals 11, for example, scenarios of vehicle to vehicle (V2V) communication, vehicle to infrastructure (V2I) communication, vehicle to pedestrian (V2P) communication and the like in vehicle to everything (V2X).

In some embodiments, the wireless communication system may further include a network management device 13.

Several base stations 12 are connected with a network management device 13 respectively. The network management device 13 may be a core network device in the wireless communication system, for example, the network management device 13 may be a mobility management entity (MME) in an evolved packet core (EPC). Or, the network management device may be other core network devices, for example, a serving gateway (SGW), a public data network gateway (PGW), a policy and charging rules function (PCRF) or a home subscriber server (HSS), and the like. The implementation of the network management device 13 is not limited in the embodiments of the present disclosure.

The execution subject involved in the embodiments of the present disclosure includes, but is not limited to, a UE such as a mobile phone terminal supporting cellular mobile communication, a base station, and the like.

An application scenario of the embodiments of the present disclosure is described as follows. As shown in FIG. 2, within each extended discontinuous reception (eDRX) cycle, there is one paging time window (PTW), and the terminal monitors a paging channel within the PTW according to a discontinuous reception (DRX) cycle, so as to receive downlink data, and the terminal is in a dormant state within remaining time. The eDRX cycle ranges from 20.48 seconds (s) to 2.92 hours (h). A value range of the DRX cycle includes { 1.28s, 2.56s, 5.12s, or 10.24s}.

The eDRX mode may refer to that a terminal device is reachable at any time, but the delay is relatively large. The delay depends on the eDRX cycle configuration, and a trade-off may be obtained between low power consumption and the delay.

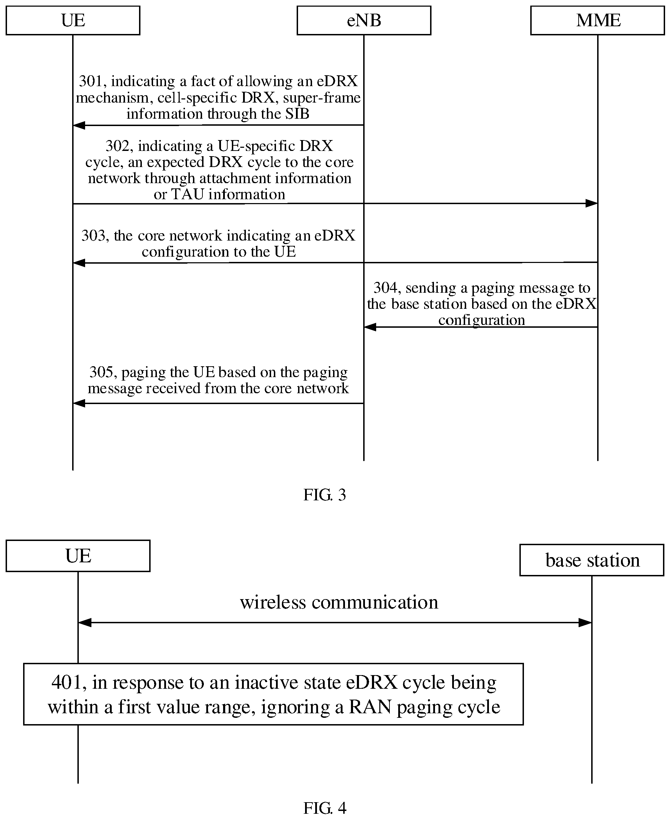

In the eDRX mechanism, the UE and a core network need to negotiate the eDRX cycle and a PTW length, steps of a negotiation process are shown in FIG. 3, which include the following steps.

At step 301, a base station indicates a fact of allowing an eDRX mechanism, cell-specific DRX, super-frame information, and the like to the UE through a system information block (SIB).

At step 302, the UE indicates a UE-specific DRX cycle, an expected DRX cycle, and the like to the core network through attachment information or tracking area update (TAU) information.

At step 303, the core network indicates an eDRX configuration to the UE, in which the eDRX configuration includes an eDRX cycle and a PTW length.

At step 304, the core network sends a paging message to the base station based on the eDRX configuration.

At step 305, the base station pages the UE based on the paging message received from the core network.

The negotiation process may be negotiated between the UE and the core network through non-access stratum (NAS) messages, and the base station may perform transparent transmission.

In a non-eDRX mechanism, the UE may monitor a paging message of the radio access network (RAN) at least based on a RAN paging cycle.

In the new radio (NR), an inactive state of the UE is introduced. A UE in the inactive state needs to receive a paging message from the core network (CN), and further needs to receive a paging message of the RAN.

The RAN may configure an inactive state eDRX cycle for a UE in the inactive state, to further reduce the power consumption of the UE in the inactive state.

If the inactive state eDRX cycle is not configured, the UE in the inactive state usually takes the shortest one of the RAN paging cycle, a CN paging cycle, and a default paging cycle as a cycle for monitoring the paging message.

When the inactive state eDRX cycle is configured, the UE in the inactive state monitors the paging message by using a monitoring cycle of the related art, and a case where a monitoring occasion is missed may occur. Therefore, when the inactive state eDRX cycle is configured, it is an urgent problem to be solved how to monitor the paging message by the UE in the inactive state to reduce occurrence of the situation of missing the paging message.

As shown in FIG. 4, a method for determining a paging parameter is provided in an embodiment, which may be performed by a UE in a cellular mobile communication system. The method includes the following step.

At step 401, in response to an inactive state eDRX cycle being within a first value range, a RAN paging cycle is ignored.

The method in this embodiment may be performed by a UE in the cellular mobile communication, and the UE may include: a terminal such as a mobile phone that performs wireless communication by using a cellular mobile communication technology.

Here, the UE may be a UE in an inactive state. The UE monitors a paging message based on a paging cycle. The paging message may include a CN paging message and a RAN paging message. In the NR, the UE in the inactive state needs to receive a paging message, i.e., the CN paging message, from a core network, and further needs to receive a paging message, i.e., the RAN paging message, from the RAN.

The RAN may configure an inactive state eDRX cycle for the UE in the inactive state to further reduce the power consumption of the UE in the inactive state. The RAN may configure the inactive state eDRX cycle for the UE through an RRC signaling.

A duration of the inactive state eDRX cycle configured by the RAN may be less than a duration of an eDRX cycle configured by the core network.

A value range of the inactive state eDRX cycle may refer to a value range of the duration of the inactive state eDRX cycle.

The value range of the duration of the inactive state eDRX cycle may be {2.56s, 5.12s, 10.24s, and values above 10.24s}. The values above 10.24s may include 20.48s, 40.56s, and the like.

A paging parameter of the paging message of the UE in the inactive state may include a time domain resource configuration parameter of the paging message and the like. The time domain resource configuration parameter includes, but is not limited to, a time domain position of a time window where the UE monitors the paging message, a cycle for the UE to monitor the paging message, and the like. The time window may include: a CN PTW and/or a RAN PTW. The cycle for the UE to monitor the paging message may include: a cycle for the UE to monitor the paging message within a paging time window, and/or a cycle for the UE to monitor the paging message outside a paging time window, and the like.

For different value ranges of the inactive state eDRX cycle, manners in which the base station sends the paging message are also different. For example, for the inactive state eDRX cycle within the first value range, the base station directly sends the RAN paging message according to the inactive state eDRX cycle. For the inactive state eDRX cycle within a second value range, the base station may set the RAN PTW within the inactive state eDRX cycle, and send the RAN paging message within the RAN PTW according to a certain cycle.

Therefore, the UE may determine a cycle for monitoring the paging message according to the duration of the inactive state eDRX cycle. The UE may monitor paging messages sent by the core network and the RAN respectively based on the determined cycle. For example, the UE may take the shorter one of a cycle for the core network to send the paging message and a cycle for the RAN to send the paging message based on the inactive state eDRX cycle as the cycle for monitoring the paging messages, so that the UE may simultaneously monitor the paging message sent by the core network and the paging message sent by the RAN.

For the inactive state eDRX cycle within the first value range, since the base station directly sends the paging message according to the inactive state eDRX cycle, the RAN paging cycle is no longer used as a cycle for sending the RAN paging message.

The first value range or the second value range may be determined based on the inactive state eDRX cycle set by the base station. If the inactive state eDRX cycle is within the first value range, the base station does not configure the RAN PTW for the UE. If the inactive state eDRX cycle is within the second value range, the base station configures the RAN PTW for the UE.

For an inactive state eDRX cycle with a long duration, the base station may set the RAN PTW within the inactive state eDRX cycle, and send the paging message within the RAN PTW according to a certain cycle. For an inactive state eDRX cycle with a short duration, the base station directly sends the paging message according to the inactive state eDRX cycle.

The first value range or the second value range may be determined based on a duration of a minimum inactive state eDRX cycle required by the base station to set the RAN PTW.

For example, the first value range may be {2.56s, 5.12s, 10.24s}, and the second value range may be the values above 10.24s, for example, {20.48s, 40.96s ...}.

For example, when the duration of the inactive state eDRX cycle is less than or equal to 10.24s, the base station directly sends the RAN paging message according to the inactive state eDRX cycle. When the duration of the inactive state eDRX cycle is greater than 10.24s, the base station may set the RAN PTW within the inactive state eDRX cycle, and send the RAN paging message within the RAN PTW according to a certain cycle.

In this way, the UE may determine, based on the inactive state eDRX cycle, that the UE ignores the RAN paging cycle, which can reduce complexity caused by considering the RAN paging cycle when determining the cycle for monitoring the paging message, and improve an efficiency of determining the cycle for monitoring the paging message.

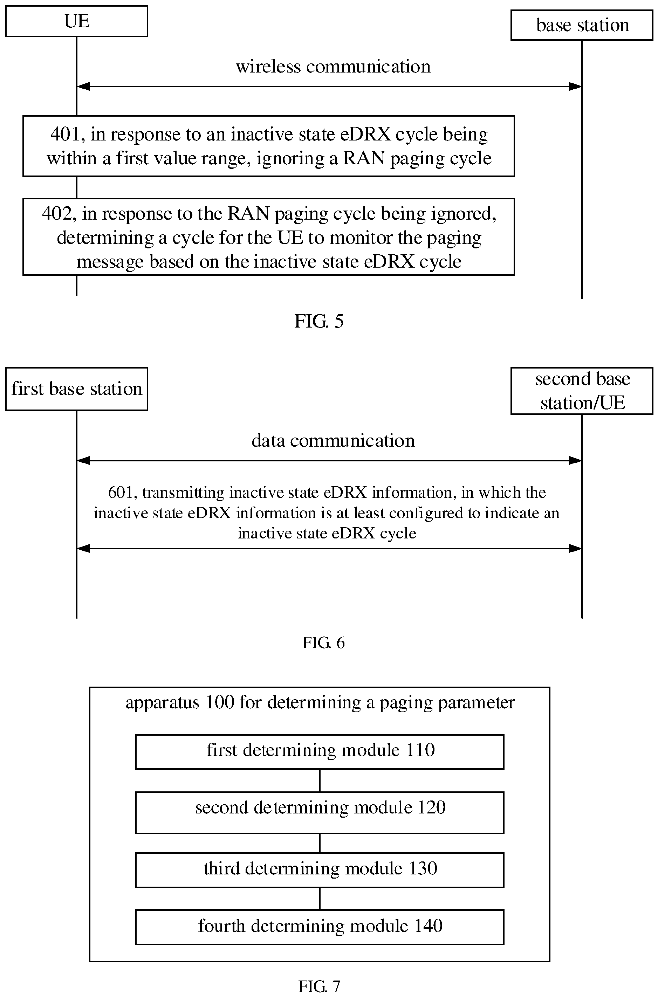

In an embodiment, as shown in FIG. 5, the method further includes the following steps.

At step 402, in response to the RAN paging cycle being ignored, a cycle for the UE to monitor the paging message is determined based on the inactive state eDRX cycle.

If the duration of the inactive state eDRX cycle is within the first value range, the base station directly sends the RAN paging message according to the inactive state eDRX cycle. Then, the UE needs to determine the cycle for monitoring the paging message at least based on the inactive state eDRX cycle.

When the UE only needs to monitor the RAN paging message, the UE may determine a cycle for monitoring the RAN paging message only based on a cycle for the base station to send the RAN paging message, that is, the inactive state eDRX cycle.

When the UE needs to monitor the RAN paging message and the CN paging message at the same time, the UE needs to determine the cycle for monitoring the RAN paging message and the CN paging message based on the inactive state eDRX cycle and a cycle for the core network to send the CN paging message. In this way, the RAN paging message and the CN paging message can be monitored at the same time, therefore occurrence of the situation of missing the paging message is reduced.

In this way, the cycle for the UE to monitor the paging message in the inactive state is determined based on the inactive state eDRX cycle, so that monitoring of the paging message is realized in case of the inactive state eDRX cycle being within the first value range, thereby reducing occurrence of the situation of missing the paging message, and improving the communication efficiency.

In an embodiment, determining, based on the inactive state eDRX cycle, the cycle for the UE to monitor the paging message includes at least one of the following:
in response to the CN PTW being set for the UE, determining, based on the inactive state eDRX cycle, a CN paging cycle, and a default paging cycle, within the CN PTW, the cycle for monitoring the RAN paging message and the CN paging message; or
in response to the CN PTW being set for the UE, determining the inactive state eDRX cycle as the cycle for monitoring the RAN paging message outside the CN PTW.

If the CN PTW is set for the UE, the UE needs to monitor the RAN paging message and the CN paging message within the CN PTW at the same time.

The base station sends the RAN paging message based on the inactive state eDRX cycle. Within the CN PTW, the core network sends the CN paging message based on the CN paging cycle and the default paging cycle. The CN paging cycle may include a UE-specific cycle.

Therefore, when the UE simultaneously monitors the RAN paging message and the CN paging message within the CN PTW, the UE needs to determine the cycle for monitoring based on the RAN paging cycle, the CN paging cycle, and the default paging cycle.

In an embodiment, determining, based on the inactive state eDRX cycle, the CN paging cycle, and the default paging cycle, within the CN PTW, the cycle for monitoring the RAN paging message and the CN paging message includes:
within the CN PTW, determining the shortest one of the inactive state eDRX cycle, the CN paging cycle, and the default paging cycle as the cycle for monitoring the RAN paging message and the CN paging message.

Due to a fact that the inactive state eDRX cycle, the CN paging cycle and the default paging cycle may have an integer multiple relationship, the UE may monitor the paging message sent based on any one of the inactive state eDRX cycle, the CN paging cycle, and the default paging cycle by taking the shortest one of the inactive state eDRX cycle, the CN paging cycle, and the default paging cycle as the cycle for monitoring.

Outside the CN PTW, the base station sends the RAN paging message based on the inactive state eDRX cycle. Therefore, the UE may determine the inactive state eDRX cycle as the cycle for monitoring the RAN paging message. In this way, the UE may monitor the RAN paging message outside the CN PTW.

In an embodiment, determining the inactive state eDRX cycle as the cycle for the UE to monitor the RAN paging message includes:
in response to no CN PTW being set for the UE, determining the shorter one of the inactive state eDRX cycle and the CN paging cycle as the cycle for monitoring the RAN paging message and the CN paging message.

If there is no CN PTW set for the UE, the base station sends the RAN paging message based on the inactive state eDRX cycle, and the core network sends the CN paging message based on the CN paging cycle. Therefore, the UE may determine the shorter one of the inactive state eDRX cycle and the CN paging cycle as the cycle for monitoring the RAN paging message and the CN paging message.

Since the inactive state eDRX cycle and the CN paging cycle may have an integer multiple relationship, the shorter one of the inactive state eDRX cycle and the CN paging cycle is taken as the cycle for monitoring, and the UE may monitor the paging message sent based on any one of the inactive state eDRX cycle and the CN paging cycle, which reduces occurrence of the situation of missing the paging message.

In an embodiment, the method further includes:
in response to the inactive state eDRX cycle being within the second value range, determining, based on the inactive state eDRX cycle, the RAN PTW for monitoring the paging message within the inactive state eDRX cycle, in which the first value range is different from the second value range.

In an embodiment, the method further includes:
in response to the inactive state eDRX cycle being within the second value range, determining, at least based on the RAN paging cycle, the cycle for the UE to monitor the paging message, in which the first value range is different from the second value range.

If the duration of the inactive state eDRX cycle is within the second value range, the base station may configure the RAN PTW within the inactive state eDRX cycle. The base station sends the RAN paging message within the RAN PTW according to the RAN paging cycle. Therefore, when the duration of the inactive state eDRX cycle is within the second value range, the UE needs to determine the cycle for monitoring the paging message at least based on the RAN paging cycle.

For example, when the UE in the inactive state needs to monitor the CN paging message and the RAN paging message at the same time, the shorter one of the RAN paging cycle and the cycle for sending the CN paging message may be taken as the cycle for monitoring the CN paging message and the RAN paging message.

The manner of determining the RAN PTW based on the inactive state eDRX cycle may be specified by a communication protocol, or the manner of determining the RAN PTW based on the inactive state eDRX cycle may be agreed upon by the base station and the UE.

One RAN PTW may be set in one inactive state eDRX cycle.

For example, the duration of the RAN PTW may be indicated by the base station, and the RAN PTW is determined by determining a start position of the RAN PTW through a predetermined rule. The predetermined rule may be that the start position of the RAN PTW within the inactive state eDRX cycle is determined by using a predetermined algorithm at least based on the inactive state eDRX cycle, and identity information of the UE (for example, the UE_ID_H). Further, an end position of the RAN PTW is determined.

The base station and the UE may determine the RAN PTW in a same manner, so that the base station may send the RAN message and the UE may monitor the RAN message at a same time domain position.

In the RAN PTW, the base station may send the RAN paging message, meanwhile the core network may send the CN paging message. Therefore, in the RAN PTW, the UE may only need to monitor the RAN paging message, or may need to simultaneously monitor the RAN paging message and the CN paging message.

When the UE only needs to monitor the RAN paging message, the UE may determine the cycle for monitoring the RAN paging message only based on the cycle for the base station to send the RAN paging message, that is, the RAN paging cycle. When the UE needs to simultaneously monitor the RAN paging message and the CN paging message, the UE needs to determine the cycle for monitoring the RAN paging message and the CN paging message based on the RAN paging cycle and the cycle for the core network to send the CN paging message.

In an embodiment, when the inactive state eDRX cycle is within the second value range, determining, at least based on the RAN paging cycle, the cycle for the UE to monitor the paging message includes at least one of the following:
in response to the CN PTW being set for the UE, determining, based on the RAN paging cycle, the CN paging cycle, and the default paging cycle, within the CN PTW which overlaps with the RAN PTW, the cycle for monitoring the RAN paging message and the CN paging message; and
in response the CN PTW being set for the UE, determining, within the RAN PTW which does not overlap with the CN PTW, the RAN paging cycle as the cycle for monitoring the RAN paging message.

If the CN PTW is set for the UE, and the CN PTW overlaps with the RAN PTW, the UE needs to simultaneously monitor the RAN paging message and the CN paging message within the CN PTW.

In the RAN PTW, the base station sends the RAN paging message based on the RAN paging cycle. In the CN PTW, the core network sends the CN paging message based on the CN paging cycle and the default paging cycle. The CN paging cycle may include a UE-specific cycle. Therefore, when the UE simultaneously monitors the RAN paging message and the CN paging message, the UE needs to determine the monitoring cycle based on the RAN paging cycle, the CN paging cycle, and the default paging cycle.

In an embodiment, determining, based on the RAN paging cycle, the CN paging cycle, and the default paging cycle, within the CN PTW which overlaps with the RAN PTW, the cycle for monitoring the RAN paging message and the CN paging message includes:
determining, within the CN PTW which overlaps with the RAN PTW, the shortest one of the RAN paging cycle, the CN paging cycle, and the default paging cycle as the cycle for monitoring the RAN paging message and the CN paging message within the CN PTW.

Since the RAN paging cycle, the CN paging cycle and the default paging cycle may have an integer multiple relationship, the UE may monitor the paging message sent based on any one of the RAN paging cycle, the CN paging cycle, and the default paging cycle by taking the shortest one of the RAN paging cycle, the CN paging cycle, and the default paging cycle as the cycle for monitoring.

In the RAN PTW which does not overlap with the CN PTW, the base station sends the RAN paging message based on the RAN paging cycle. Therefore, the UE may determine the RAN paging cycle as the cycle for monitoring the RAN paging message. In this way, the UE may monitor the RAN paging message within the RAN PTW which does not overlap with the CN PTW.

As shown in FIG. 6, a method for transmitting information is provided in an embodiment, which may be performed by a UE in a cellular mobile communication system. The method includes the following step.

At step 601, inactive state eDRX information is transmitted, in which the inactive state eDRX information is at least configured to indicate an inactive state eDRX cycle.

Here, the first base station may be an anchor base station or a non-anchor base station of a UE in an inactive state. Correspondingly, a second base station is a base station which may perform data transmission with the first base station. For example, the first base station is an anchor base station of the UE, and the second base station is a non-anchor base station of the UE.

The anchor base station may be a base station with which the UE enters the inactive state. The anchor base station may configure or store related information of the UE in the inactive state for the UE, for example, an inactive state eDRX cycle, a RAN paging cycle, and the like.

The inactive state eDRX information may be information associated with the inactive state eDRX cycle. For example, the inactive state eDRX information may indicate configuration information for the UE to monitor a paging message in the inactive state eDRX cycle. The inactive state eDRX information is at least used to indicate the inactive state eDRX cycle. The anchor base station may transmit the inactive state eDRX cycle to the UE through the inactive state eDRX information.

The anchor base station may send configuration information of the UE in the inactive state, such as inactive state eDRX information, to the non-anchor base station.

Transmitting the inactive state eDRX information may include the anchor base station sending the inactive state eDRX information to the non-anchor base station, and/or the non-anchor base station sending the inactive state eDRX information to the anchor base station.

By transmitting the inactive state eDRX information, the non-anchor base station may at least determine the inactive state eDRX cycle configured for the UE in the inactive state, which reduces the situation of communicating a wrong parameter due to the inactive state eDRX cycle used by the same UE in the inactive state.

In an embodiment, transmitting the inactive state eDRX information includes:
transmitting a RAN paging message carrying the transmission inactive state eDRX information to the UE;
performing transmission of a context request message carrying the transmission inactive state eDRX information with the second base station; and
performing transmission of a context response message carrying the transmission inactive state eDRX information with the second base station.

The first base station and the second base station need to perform exchanging of context. In the exchanging of context, the first base station needs to exchange the context request message and the context response message with the second base station.

When the UE is in a coverage range of the first base station, the first base station may send the RAN paging message carrying the transmission inactive state eDRX information to the UE. The UE may determine the inactive state eDRX cycle based on the inactive state eDRX information.

The first base station and the second base station need to perform the exchanging of context. In the exchanging of context, the first base station needs to exchange the context request message and the context response message with the second base station.

The first base station may carry the inactive state eDRX information in the context request message or the context response message and send the context request message or the context response message to the second base station. In this way, on the one hand, the exchanging of the inactive state eDRX information is realized. On the other hand, the amount of information carried in the context request message or the context response message is increased, therefore efficiency of information exchanging is improved.

In an embodiment, in response to the inactive state eDRX cycle being within a first value range, the inactive state eDRX information is at least used to indicate the inactive state eDRX cycle; and

in response to the inactive state eDRX cycle being within a second value range, the inactive state eDRX information is at least used to indicate the inactive state eDRX cycle and the RAN paging cycle, in which the first value range is different from the second value range.

A value range of the inactive state eDRX cycle may be a value range of a duration of the inactive state eDRX cycle.

The value range of the duration of the inactive state eDRX cycle may be {2.56s, 5.12s, 10.24s, and values above 10.24s}, the values above 10.24s may include 20.48s, 40.56s, and the like.

The first value range or the second value range may be determined based on the inactive state eDRX cycle configured by the base station. If the inactive state eDRX cycle is within the first value range, the base station does not configure the RAN PTW for the UE. If the inactive state eDRX cycle is within the second value range, the base station configures the RAN PTW for the UE.

The first value range or the second value range may be determined based on a duration of a minimum inactive state eDRX cycle required by the base station to set the RAN PTW.

For example, the first value range may be {2.56s, 5.12s, 10.24s}, and the second value range may be the values above 10.24s, for example, {20.48s, 40.96s ...}.

If the duration of the inactive state eDRX cycle is within the second value range, the base station may configure the RAN PTW within the inactive state eDRX cycle. The base station sends the RAN paging message within the RAN PTW according to the RAN paging cycle. Therefore, when the duration of the inactive state eDRX cycle is within the second value range, the UE needs to determine the cycle for monitoring the paging message at least based on the RAN paging cycle. In addition, the manner of determining the RAN PTW based on the inactive state eDRX cycle may be specified by a communication protocol, or the manner of determining the RAN PTW based on the inactive state eDRX cycle may be agreed upon by the base station and the UE.

Therefore, if the duration of the inactive state eDRX cycle is within the second value range, the non-anchor base station needs to determine a cycle for sending the paging message according to the inactive state eDRX cycle and the RAN paging cycle. The UE needs to determine a cycle for receiving the paging message according to the inactive state eDRX cycle and the RAN paging cycle. Therefore, the anchor base station needs to indicate the inactive state eDRX cycle and the RAN paging cycle to the non-anchor base station and/or the UE.

If the duration of the inactive state eDRX cycle is within the first value range, the base station directly sends the RAN paging message according to the inactive state eDRX cycle. Then, the UE needs to determine the cycle for monitoring the paging message at least based on the inactive state eDRX cycle. The base station or the UE may ignore the RAN paging cycle.

Therefore, if the duration of the inactive state eDRX cycle is within the second value range, the non-anchor base station needs to determine the cycle for sending the paging message according to the inactive state eDRX cycle. The UE needs to determine the cycle for receiving the paging message according to the inactive state eDRX cycle. Therefore, the anchor base station needs to indicate the inactive state eDRX cycle to the non-anchor base station and/or the UE.

For an inactive state eDRX cycle with a long duration, the base station may set the RAN PTW within the inactive state eDRX cycle, and send the paging message within the RAN PTW according to a certain cycle. For an inactive state eDRX cycle with a short duration, the base station directly sends the paging message according to the inactive state eDRX cycle.

A predetermined duration may be determined based on a duration of a minimum inactive state eDRX cycle required by the base station to set the RAN PTW.

Exemplary, when the duration of the inactive state eDRX cycle is greater than 10.24s, the base station may set the RAN PTW within the inactive state eDRX cycle, and send the RAN paging message within the RAN PTW according to a certain cycle. When the duration of the inactive state eDRX cycle is less than or equal to 10.24s, the base station directly sends the RAN paging message according to the inactive state eDRX cycle. In this case, the predetermined duration is 10.24s.

In an embodiment, the inactive state eDRX information is at least used to indicate the transmission inactive state eDRX cycle and the RAN paging cycle.

No matter the duration of the inactive state eDRX cycle is within the first value range or within the second value range, the anchor base station may indicate the inactive state eDRX cycle and the RAN paging cycle to the non-anchor base station and/or the UE. Whether the inactive state eDRX cycle is within the first value range or within the second value range is no longer distinguished, which simplifies complexity of sending the inactive state eDRX information.

In an embodiment, the method further includes:
in response to the first base station being a non-anchor base station, and the inactive state eDRX cycle being within the first value range, decoding the transmission inactive state eDRX cycle indicated by the received inactive state eDRX information, in which the first value range is different from the second value range; and
in response to the first base station being a non-anchor base station, and the inactive state eDRX cycle being within the second value range, decoding the transmission inactive state eDRX cycle and the RAN paging cycle indicated by the received inactive state eDRX information.

If the duration of the inactive state eDRX cycle is within the second value range, the base station may configure the RAN PTW within the inactive state eDRX cycle. The base station sends the RAN paging message within the RAN PTW according to the RAN paging cycle. Therefore, when the duration of the inactive state eDRX cycle is within the second value range, the UE needs to determine the cycle for monitoring the paging message at least based on the RAN paging cycle. In addition, the manner of determining the RAN PTW based on the inactive state eDRX cycle may be specified by a communication protocol, or the manner of determining the RAN PTW based on the inactive state eDRX cycle may be agreed upon by the base station and the UE.

Therefore, if the duration of the inactive state eDRX cycle is within the second value range, the non-anchor base station needs to determine a cycle for sending the paging message according to the inactive state eDRX cycle and an RAN paging cycle. The UE needs to determine the cycle for receiving the paging message according to the inactive state eDRX cycle and the RAN paging cycle. The non-anchor base station needs to determine the inactive state eDRX cycle and the RAN paging cycle. Therefore, the non-anchor base station may decode the inactive state eDRX cycle and the RAN paging cycle from the inactive state eDRX information.

If the duration of the inactive state eDRX cycle is within the first value range, the base station directly sends the RAN paging message according to the inactive state eDRX cycle. Then, the UE needs to determine the cycle for monitoring the paging message at least based on the inactive state eDRX cycle. The base station or the UE may ignore the RAN paging cycle.

Therefore, if the duration of the inactive state eDRX cycle is within the second value range, the non-anchor base station needs to determine the cycle for sending the paging message according to the inactive state eDRX cycle. The UE needs to determine the cycle for receiving the paging message according to the inactive state eDRX cycle. The non-anchor base station may send the RAN paging message by only determining the inactive state eDRX cycle. Therefore, the non-anchor base station may only decode the inactive state eDRX cycle from the inactive state eDRX information.

An example is provided below in conjunction with any of the above embodiments.
1. The introduction of a new parameter causes the terminal to change a behavior of receiving the paging message.
   a) The terminal is a terminal in an inactive state.
   b) The new parameter is the inactive state eDRX cycle.

If the value range of the inactive state eDRX cycle configured for the terminal is the second value range, the terminal needs to determine a paging parameter according to both the RAN paging cycle and the inactive state eDRX cycle.
a) The second value range includes values greater than 10.24s.
b) In an embodiment:
   a value range of the RAN paging cycle is {rf32, rf64, rf128, rf256}; and a value range of the inactive state eDRX cycle configured for the terminal is the second value range.

In this case, the terminal monitors the paging message within the RAN PTW according to the RAN paging cycle, in which the RAN PTW is determined based on the inactive state eDRX cycle.

In this case, the terminal simultaneously monitors the CN paging message and the RAN paging message within the CN PTW, in which within the CN PTW, a cycle for monitoring the CN paging message and the RAN paging message needs to be determined through the RAN paging cycle.

In an embodiment, the CN paging message and the RAN paging message may be monitored according to a cycle of min {default paging cycle, UE-specific cycle, RAN paging cycle}.

3. If the value range of the inactive state eDRX cycle configured for the terminal is the first value range, the terminal needs to ignore the configured RAN paging cycle.

In an embodiment, in this case (the value range of the inactive state eDRX cycle is the first value range), the terminal ignores the value of the parameter of the required configured RAN paging cycle.
a) The first value range is {2.56s, 5.12s, 10.24s}.
b) In an embodiment:

1) if the CN PTW is configured:
   outside the PTW window, the paging message is monitored according to the inactive state eDRX cycle. The CN paging message and the RAN paging message are simultaneously monitored within the CN PTW. Within the CN PTW, the cycle for monitoring the CN paging message and the RAN paging message needs to be determined according to the inactive state eDRX cycle.

In an embodiment, the CN paging message and the RAN paging message are monitored according to a cycle of min {default paging cycle, UE-specific cycle, inactive state eDRX cycle}.

2) if no CN PTW is configured:
in an embodiment, the CN paging message and the RAN paging message are monitored according to the shorter one of the CN eDRX cycle and the inactive state eDRX cycle.

4. When eDRX related parameter is transmitted between nodes, the following may be followed.
a) In an embodiment, the eDRX related parameter is used for message transmission between the anchor base station and the non-anchor base station message of the UE in the inactive state.
b) In an embodiment, a transmitted message may be the RAN paging message.
c) In an embodiment, the transmitted message may be a UE context request message/a UE context response message.
d) In an embodiment, an attribute of the RAN paging cycle is optional.

If the value range of the inactive state eDRX cycle is the first value range, it is necessary for the anchor base station to simultaneously transmit the RAN paging cycle and the inactive state DRX cycle.

If the value range of the inactive state eDRX cycle is the second value range, the anchor base station only needs to transmit the inactive state eDRX cycle. At this case, the RAN paging cycle does not need to be transmitted between the base stations.
e) In an embodiment, the attribute of the RAN paging cycle becomes required;

If the value range of the inactive state eDRX cycle is the second value range, it is necessary for the non-anchor base station to decode and obtain both the RAN paging cycle and the inactive state eDRX cycle.

If the value range of the inactive state eDRX cycle is the first value range, the non-anchor base station may only decode and obtain the inactive state eDRX cycle, and ignore the RAN paging cycle.

An embodiment of the present disclosure further provides an apparatus for determining a paging parameter, which is performed by a UE in a cellular mobile wireless communication. As shown in FIG. 7, the apparatus 100 for determining a paging parameter includes a first determining module 110.

The first determining module 110 is configured to ignore a RAN paging cycle in response to an inactive state eDRX cycle being within a first value range.

In an embodiment, the apparatus 100 further includes a second determining module 120.

The second determining module 120 is configured to determine, based on the inactive state eDRX cycle, a cycle for the UE to monitor a paging message, in response to the RAN paging cycle being ignored.

In an embodiment, the second determining module 120 is configured to perform at least one of the following:
in response to a core network (CN) paging time window (PTW) being set for the UE, determining, based on the inactive state eDRX cycle, a CN paging cycle, and a default paging cycle, within the CN PTW, a cycle for monitoring a RAN paging message and a CN paging message; or
in response to a CN PTW being set for the UE, determining the inactive state eDRX cycle as a cycle for monitoring a RAN paging message outside the CN PTW.

In an embodiment, the second determining module 120 is configured to:
determine, within the CN PTW, the shortest one of the inactive state eDRX cycle, the CN paging cycle, and the default paging cycle as the cycle for monitoring the RAN paging message and the CN paging message.

In an embodiment, the second determining module 120 is configured to:
in response to no CN PTW being set for the UE, determine the shorter one of the inactive state eDRX cycle and a CN paging cycle as the cycle for monitoring a RAN paging message and a CN paging message.

In an embodiment, the apparatus 100 further includes a third determining module 130.

The third determining module 130 is configured to determine, based on the inactive state eDRX cycle, a RAN PTW for monitoring a paging message within the inactive state eDRX cycle, in response to the inactive state eDRX cycle being within a second value range, in which the first value range is different from the second value range.

In an embodiment, the apparatus 100 further includes a fourth determining module 140.

The fourth determining module 140 is configured to determine, at least based on the RAN paging cycle, a cycle for the UE to monitor a paging message, in response to the inactive state eDRX cycle being within a second value range, in which the first value range is different from the second value range.

In an embodiment, the fourth determining module 140 is configured to perform at least one of the following:
in response to a CN PTW being set for the UE, determining, based on the RAN paging cycle, a CN paging cycle, and a default paging cycle, within the CN PTW which overlaps with a RAN PTW, a cycle for monitoring a RAN paging message and a CN paging message; or
in response to a CN PTW being set for the UE, determining, within a RAN PTW which does not overlap with the CN PTW, the RAN paging cycle as a cycle for monitoring a RAN paging message.

In an embodiment, the fourth determining module 140 is configured to:
determine, within the CN PTW which overlaps with the RAN PTW, the shortest one of the RAN paging cycle, the CN paging cycle, and the default paging cycle as the cycle for monitoring the RAN paging message and the CN paging message within the CN PTW.

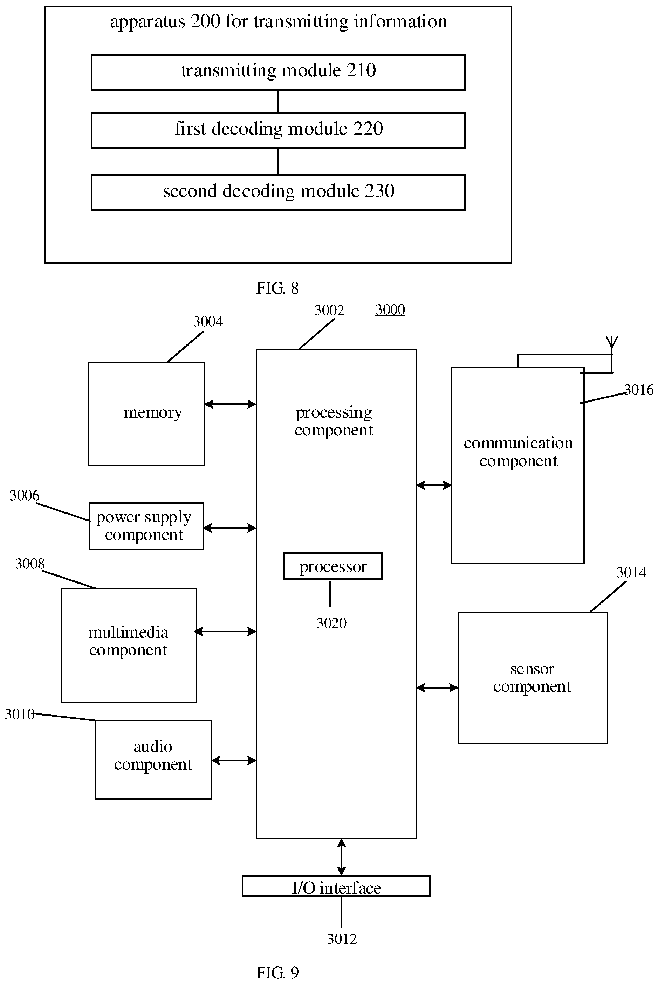

An embodiment of the present disclosure further provides an apparatus for transmitting information, which is performed by a first base station in a cellular mobile wireless communication. As shown in FIG. 8, the apparatus 200 for transmitting information includes a transmitting module 210.

The transmitting module 210 is configured to transmit inactive state extended discontinuous reception (eDRX) information, in which the inactive state eDRX information is at least configured to indicate an inactive state eDRX cycle.

In an embodiment, the transmitting module 210 is configured to:
transmit a RAN paging message carrying the transmission inactive state eDRX information to the UE;
perform transmission of a context request message carrying the transmission inactive state eDRX information with the second base station; and
perform transmission of a context response message carrying the transmission inactive state eDRX information with the second base station.

In an embodiment, in response to the inactive state eDRX cycle being within a first value range, the inactive state eDRX information is at least configured to indicate the inactive state eDRX cycle; and
in response to the inactive state eDRX cycle being within a second value range, the inactive state eDRX information is at least configured to indicate the inactive state eDRX cycle and a RAN paging cycle, in which the first value range is different from the second value range.

In an embodiment, the inactive state eDRX information is at least configured to indicate a transmission inactive state eDRX cycle and a RAN paging cycle.

In an embodiment, the apparatus 200 further includes a first decoding module 220 and a second decoding module 230.

The first decoding module 220 is configured to decode the transmission inactive state eDRX cycle indicated by the inactive state eDRX information, in response to the first base station being a non-anchor base station, and the inactive state eDRX cycle being within a first value range, wherein the first value range is different from the second value range.

The second decoding module 230 is configured to decode the transmission inactive state eDRX cycle and the RAN paging cycle indicated by the inactive state eDRX information, in response to the first base station being a non-anchor base station, and the inactive state eDRX cycle being within the second value range.

In an embodiment, the first determining module 110, the second determining module 120, the third determining module 130, the fourth determining module 140, the transmitting module 210, the first decoding module 220, and the second decoding module 230 may be implemented by one or more CPUs (central processing units), GPUs (graphics processing units), BPs (baseband processors), ASICs (application specific integrated circuits), DSPs, PLDs (programmable logic devices), CPLDs (complex programmable logic devices), FPGAs (field-programmable gate arrays), general-purpose processors, controllers, MCUs (micro controller units), microprocessors, or other electronic components, for performing the aforementioned method.

FIG. 9 is a block diagram of an apparatus 3000 for determining a paging parameter or transmitting information according to an embodiment. For example, the apparatus 3000 may be a mobile phone, a computer, a digital broadcasting terminal, a messaging device, a game console, a tablet device, a medical equipment, a fitness equipment, a personal digital assistant, etc.

Referring to Fig. 9, the apparatus 3000 may include one or more components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the whole operation of the apparatus 3000, such as the operations related to display, phone call, data communication, camera operation and recording operation. The processing component 3002 may include one or more processors 3020 to perform instructions, to complete all or part of steps of the above method. In addition, the processing component 3002 may include one or more modules for the convenience of interaction between the processing component 3002 and other components. For example, the processing component 3002 may include a multimedia module for the convenience of interaction between the multimedia component 3008 and the processing component 3002.

The memory 3004 is configured to store all types of data to support the operation of the apparatus 3000. Examples of the data include the instructions of any applications or methods operated on the apparatus 3000, contact data, phone book data, messages, pictures, videos, etc. The memory 3004 may be implemented by any type of volatile or non-volatile storage devices or their combination, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 3006 may provide power supply for all components of the apparatus 3000. The power supply component 3006 may include power supply management system, one or more power supplies, and other units related to generating, managing and distributing power for the apparatus 3000.

The multimedia component 3008 includes an output interface screen provided between the apparatus 3000 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 3008 includes a front camera and/or a rear camera. When the apparatus 3000 is in operation mode, such as shooting mode or video mode, the front camera or the rear camera may receive the external multimedia data. Each front camera and rear camera may be a fixed optical lens system or an optical lens system with focal length and optical zoom capacity.

The audio component 3010 is configured as an output and/or input signal. For example, the audio component 3010 includes a microphone (MIC). When the apparatus 3000 is in operation mode, such as call mode, record mode, and speech recognition mode, the microphone is configured to receive the external audio signals. The audio signals received may be further stored in the memory 3004 or sent via the communication component 3016. In some embodiments, the audio component 3010 further includes a speaker configured to output an audio signal.

The I/O interface 3012 provides an interface for the processing component 3002 and the peripheral interface module, and the peripheral interface module may be a keyboard, a click wheel, a button, etc. The buttons may include but not limited to a home button, a volume button, a start button and a lock button.

The sensor component 3014 includes one or more sensors, configured to provide various aspects of status assessment for the apparatus 3000. For example, the sensor component 3014 may detect the on/off state of the apparatus 3000 and the relative positioning of the component. For example, the component is a display and a keypad of the apparatus 3000. The sensor component 3014 may further detect the location change of the apparatus 3000 or one component of the apparatus 3000, the presence or absence of contact between the user and the apparatus 3000, the orientation or acceleration/deceleration of the apparatus 3000, and the temperature change of the apparatus 3000. The sensor component 3014 may include a proximity sensor, which is configured to detect the existence of the objects nearby without any physical contact. The sensor component 3014 may further include a light sensor such as CMOS or CCD image sensor, which is configured to use in imaging applications. In some embodiments, the sensor component 3014 may further include an acceleration transducer, a gyroscope sensor, a magnetic sensor, a pressure sensor or a temperature sensor.

The communication component 3016 is configured for the convenience of wire or wireless communication between the apparatus 3000 and other devices. The apparatus 3000 may access wireless networks based on communication standard, such as WiFi, 2G or 3G, or their combination. In an embodiment, the communication component 3016 receives broadcast signals or broadcast-related information from an external broadcast management system via a broadcast channel. In an exemplary embodiment, the communication component 3016 further includes a near field communication (NFC) module to facilitate short-range communication. For example, an NFC module may be implemented based on radio frequency identification (RFID) technology, infrared data association (IRDA) technology, ultra-wideband (UWB) technology, Bluetooth (BT) technology and other technologies.

In an exemplary embodiment, the apparatus 3000 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, to perform the above method.

In an embodiment, a non-temporary computer readable storage medium is further provided which includes instructions, such as the memory 3004 including instructions. The instructions may be executed by the processor 3020 of the apparatus 3000 to complete the above methods. For example, the non-transitory computer readable storage medium may be a ROM, a random access memory (RAM), a CD-ROM, a magnetic tape, a floppy disk, an optical data storage device, etc.

Other embodiments of the present disclosure will be apparent to those skilled in the art from consideration of the specification and practice of the disclosure disclosed here. This application is intended to cover any variations, uses, or adaptations of the present disclosure following the general principles thereof and including such departures from the present disclosure as come within known or customary practice in the art The description and the embodiments are to be regarded as exemplary only, and in an embodiment the true scope and spirit of the present disclosure are given by the appended claims.

It should be understood that the present disclosure is not limited to the precise structure described above and shown in the drawings, and various modifications and changes may be made without departing from its scope. The scope of the present disclosure is only limited by the appended claims.

## Claims

1. A method for determining a paging parameter, performed by a user equipment (UE), comprising:
in response to an inactive state extended discontinuous reception (eDRX) cycle being within a first value range, ignoring a radio access network (RAN) paging cycle.

2. The method of claim 1, further comprising:
in response to ignoring the RAN paging cycle, determining, based on the inactive state eDRX cycle, a cycle for the UE to monitor a paging message.

3. The method of claim 2, wherein determining, based on the inactive state eDRX cycle, the cycle for the UE to monitor the paging message comprises at least one of:
in response to a core network (CN) paging time window (PTW) being set for the UE, determining, based on the inactive state eDRX cycle, a CN paging cycle, and a default paging cycle, within the CN PTW, a cycle for monitoring a RAN paging message and a CN paging message; or
in response to a CN PTW being set for the UE, determining the inactive state eDRX cycle as a cycle for monitoring a RAN paging message outside the CN PTW.

4. The method of claim 3, wherein determining, based on the inactive state eDRX cycle, the CN paging cycle, and the default paging cycle, within the CN PTW, the cycle for monitoring the RAN paging message and the CN paging message comprises:
determining, within the CN PTW, the shortest one of the inactive state eDRX cycle, the CN paging cycle, and the default paging cycle as the cycle for monitoring the RAN paging message and the CN paging message.

5. The method of claim 2, wherein determining, based on the inactive state eDRX cycle, the cycle for the UE to monitor the paging message comprises:
in response to no CN PTW being set for the UE, determining the shorter one of the inactive state eDRX cycle and a CN paging cycle as the cycle for monitoring a RAN paging message and a CN paging message.

6. The method of claim 1, further comprising:
in response to the inactive state eDRX cycle being within a second value range, determining, based on the inactive state eDRX cycle, a RAN PTW for monitoring a paging message within the inactive state eDRX cycle, wherein the first value range is different from the second value range.

7. The method of claim 1, further comprising:
in response to the inactive state eDRX cycle being within a second value range, determining, at least based on the RAN paging cycle, a cycle for the UE to monitor a paging message, wherein the first value range is different from the second value range.

8. The method of claim 7, wherein in response to the inactive state eDRX cycle being within the second value range, determining, at least based on the RAN paging cycle, the cycle for the UE to monitor the paging message comprises at least one of:
in response to a CN PTW being set for the UE, determining, based on the RAN paging cycle, a CN paging cycle, and a default paging cycle, within the CN PTW which overlaps with a RAN PTW, a cycle for monitoring a RAN paging message and a CN paging message; or
in response to a CN PTW being set for the UE, determining, within a RAN PTW which does not overlap with the CN PTW, the RAN paging cycle as a cycle for monitoring a RAN paging message.

9. The method of claim 8, wherein determining, based on the RAN paging cycle, the CN paging cycle, and the default paging cycle, within the CN PTW which overlaps with the RAN PTW, the cycle for monitoring the RAN paging message and the CN paging message comprises:
determining, within the CN PTW which overlaps with the RAN PTW, the shortest one of the RAN paging cycle, the CN paging cycle, and the default paging cycle as the cycle for monitoring the RAN paging message and the CN paging message within the CN PTW.

10. A method for transmitting information, performed by a first base station, comprising:
transmitting inactive state extended discontinuous reception (eDRX) information, wherein the inactive state eDRX information is at least configured to indicate an inactive state eDRX cycle.

11. The method of claim 10, wherein transmitting the inactive state eDRX information comprises:
transmitting a radio access network (RAN) paging message carrying the transmission inactive state eDRX information to a user equipment (UE);
performing transmission of a context request message carrying the transmission inactive state eDRX information with a second base station; and
performing transmission of a context response message carrying the transmission inactive state eDRX information with the second base station.

12. The method of claim 10, wherein,
in response to the inactive state eDRX cycle being within a first value range, the inactive state eDRX information is at least configured to indicate the inactive state eDRX cycle; and
in response to the inactive state eDRX cycle being within a second value range, the inactive state eDRX information is at least configured to indicate the inactive state eDRX cycle and a RAN paging cycle, wherein the first value range is different from the second value range.

13. The method of claim 10, wherein the inactive state eDRX information is at least configured to indicate a transmission inactive state eDRX cycle and a RAN paging cycle.

14. The method of claim 13, further comprising:
in response to the first base station being a non-anchor base station, and the inactive state eDRX cycle being within a first value range, decoding the transmission inactive state eDRX cycle indicated by the inactive state eDRX information, wherein the first value range is different from a second value range; and
in response to the first base station being a non-anchor base station, and the inactive state eDRX cycle being within the second value range, decoding the transmission inactive state eDRX cycle and the RAN paging cycle indicated by the inactive state eDRX information.

15. An apparatus for determining a paging parameter, comprising:
a first determining module, configured to ignore a radio access network (RAN) paging cycle, in response to an inactive state extended discontinuous reception (eDRX) cycle being within a first value range.

16. The apparatus of claim 15, further comprising:
a second determining module, configured to determine, based on the inactive state eDRX cycle, a cycle for the UE to monitor a paging message in response to the RAN paging cycle being ignored.

17. The apparatus of claim 16, wherein the second determining module is configured to perform at least one of:
in response to a core network (CN) paging time window (PTW) being set for the UE, determining, based on the inactive state eDRX cycle, a CN paging cycle, and a default paging cycle, within the CN PTW, a cycle for monitoring a RAN paging message and a CN paging message; or
in response to a CN PTW being set for the UE, determining the inactive state eDRX cycle as a cycle for monitoring a RAN paging message outside the CN PTW.

18. The apparatus of claim 17, wherein the second determining module is configured to:
determine, within the CN PTW, the shortest one of the inactive state eDRX cycle, the CN paging cycle, and the default paging cycle as the cycle for monitoring the RAN paging message and the CN paging message.

19. The apparatus of claim 16, wherein the second determining module is configured to:
in response to no CN PTW being set for the UE, determine the shorter one of the inactive state eDRX cycle and a CN paging cycle as the cycle for monitoring a RAN paging message and a CN paging message.

20. The apparatus of claim 15, further comprising:
a third determining module, configured to determine, based on the inactive state eDRX cycle, a RAN PTW for monitoring a paging message within the inactive state eDRX cycle, in response to the inactive state eDRX cycle being within a second value range, wherein the first value range is different from the second value range.

21. The apparatus of claim 15, further comprising:
a fourth determining module, configured to determine, at least based on the RAN paging cycle, a cycle for the UE to monitor a paging message, in response to the inactive state eDRX cycle being within a second value range, wherein the first value range is different from the second value range.

22. The apparatus of claim 21, wherein the fourth determining module is configured to perform at least one of:
in response to a CN PTW being set for the UE, determining, based on the RAN paging cycle, a CN paging cycle, and a default paging cycle, within the CN PTW which overlaps with a RAN PTW, a cycle for monitoring a RAN paging message and a CN paging message ; or
in response to a CN PTW being set for the UE, determining, within a RAN PTW which does not overlap with the CN PTW, the RAN paging cycle as a cycle for monitoring a RAN paging message.

23. The apparatus of claim 22, wherein the fourth determining module is configured to:
determine, within the CN PTW which overlaps with the RAN PTW, the shortest one of the RAN paging cycle, the CN paging cycle, and the default paging cycle as the cycle for monitoring the RAN paging message and the CN paging message within the CN PTW.

24. An apparatus for transmitting information, located in a first base station, comprising:
a transmitting module, configured to transmit inactive state extended discontinuous reception (eDRX) information, wherein the inactive state eDRX information is at least configured to indicate an inactive state eDRX cycle.

25. The apparatus of claim 24, wherein the transmitting module is configured to:
transmit a radio access network (RAN) paging message carrying the transmission inactive state eDRX information to a user equipment (UE);
perform transmission of a context request message carrying the inactive state eDRX information with a second base station; and
perform transmission of a context response message carrying the inactive state eDRX information with the second base station.

26. The apparatus of claim 24, wherein,
in response to the inactive state eDRX cycle being within a first value range, the inactive state eDRX information is at least configured to indicate the inactive state eDRX cycle; and
in response to the inactive state eDRX cycle being within a second value range, the inactive state eDRX information is at least configured to indicate the inactive state eDRX cycle and a RAN paging cycle, wherein the first value range is different from the second value range.

27. The apparatus of claim 24, wherein the inactive state eDRX information is at least configured to indicate a transmission inactive state eDRX cycle and a RAN paging cycle.

28. The apparatus of claim 27, further comprising:
a first decoding module, configured to decode the transmission inactive state eDRX cycle indicated by the inactive state eDRX information, in response to the first base station being a non-anchor base station, and the inactive state eDRX cycle being within a first value range, wherein the first value range is different from a second value range; and
a second decoding module, configured to decode the transmission inactive state eDRX cycle and the RAN paging cycle indicated by the inactive state eDRX information, in response to the first base station being a non-anchor base station, and the inactive state eDRX cycle being within the second value range.

29. A communication device, comprising a processor, a memory and an executable program which is stored in the memory and executable by the processor, wherein when the processor executes the executable program, steps of the method for determining a paging parameter according to any one of claims 1 to 9 or steps of the method for transmitting information according to any one of claims 10 to 14 are executed.

30. A storage medium having an executable program stored thereon, wherein the executable program, when executed by a processor, implements steps of the method for determining a paging parameter according to any one of claims 1 to 9, or steps of the method for transmitting information according to any one of claims 10 to 14.
